# EUROPEAN PATENT SPECIFICATION

(11) **EP 4 443 037 B1**
(45) Date of publication and mention of the grant of the patent: **11.03.2026**
(21) Application number: 24167070.2
(22) Date of filing: 27.03.2024
(51) Int. Cl.: F25B 41/20, F16K 11/07, F16K 31/06, F16K 31/08

(54) **ELECTRO-MAGNETIC THERMAL CONTROL VALVE**
ELEKTROMAGNETISCHES WÄRMEREGELVENTIL
SOUPAPE DE RÉGULATION THERMIQUE ÉLECTROMAGNÉTIQUE

(30) Priority: 03.04.2023 US 202318130143
(43) Date of publication of application: 09.10.2024
(73) Proprietor: Ingersoll-Rand Industrial U.S., Inc., Davidson, NC 28036 (US)
(72) Inventor: Poulose, Vineeth, Davidson, NC, 28036 (US)
(74) Representative: Murgitroyd & Company

(56) References cited:
- CN-A- 105 840 872
- CN-A- 114 484 005
- DE-A1- 102019 110 457
- JP-A- 2020 091 003
- US-B1- 9 989 164

## Description

### BACKGROUND

Compressors increase the pressure of a compressible fluid (e.g., air, gas, etc.) by reducing the volume of the fluid. Often, compressors are staged so that the fluid is compressed several times in different stages, to further increase the discharge pressure of the fluid. As the pressure of the fluid increases, the temperature of the fluid also increases. In some compressors, the compressed fluid may be cooled in between stages with a cooling system. Compressors may be divided between contact-cooled compressors and oil-free compressors.

Examples of prior art electro-magnetic thermal control valves which can be employed in the cooling of the compressed fluid are disclosed in CN114484005A, CN105840872A, US9989164B1 and DE102019110457A1.

### SUMMARY

According to a first aspect of the present invention there is provided an electro-magnetic thermal control valve (EMTCV) configured to selectably direct and control an amount of coolant fluid to a cooler in a coolant circulation system, the EMTCV as recited in claim 1.

Preferably, the EMTCV further includes a first sleeve inlet, a second sleeve inlet, and a sleeve outlet and the valve housing further defines a first sub-chamber and a second sub-chamber, the first sub-chamber defined between the coolant fluid inlet and the cooler inlet, and the second sub-chamber defined at an exit of the cooler outlet.

Preferably, at the idle position, the coolant fluid flows into the coolant fluid inlet, filling the first sub-chamber, flowing into the sleeve chamber through the first sleeve inlet, and exiting through the coolant fluid outlet, thereby by-passing the cooler when in use.

Preferably, at the intermediate position, the coolant fluid flows from the coolant fluid inlet to the first sub-chamber and is split between a first coolant fluid flow and a second coolant fluid flow, the first coolant fluid flow flowing into the sleeve chamber through the first sleeve inlet, and the second coolant fluid flowing to the cooler inlet to be cooled prior to entering the second sub-chamber through the cooler outlet, entering the sleeve chamber through the second sleeve inlet and rejoining the first coolant fluid flow prior to exiting through the coolant fluid outlet.

Preferably, at the actuated position, the coolant fluid flows into the coolant fluid inlet, filling the first sub-chamber and flowing to the cooler inlet to be cooled prior to entering the second sub-chamber through the cooler outlet, entering the sleeve chamber through the second sleeve inlet, and exits through the coolant fluid outlet.

Preferably the EMTCV further comprises a biasing component biasing the movable sleeve in the idle position, in a direction towards the first end of the movable sleeve when the electromagnet is not energized. Preferably the biasing component is at least one of a compression spring or a tension spring.

Preferably the force generated by the electromagnet is proportional to a current supplied to the electromagnet, allowing to vary the movement of the movable sleeve to a plurality of intermediate positions and control the amount of coolant flowing to the cooler.

Preferably a current supplied to the electromagnet to energize the electromagnet is reversed, supplying an electromagnetic force that pulls the permanent magnet in a direction towards the electromagnet, and pulling the movable sleeve towards the idle position.

According to a second aspect of the invention there is provided a coolant circulation system for regulating a discharge temperature in a compressor airend, the coolant circulation system comprising:
a cooler configured to cool a coolant fluid circulating through the coolant circulation system; and
an electro-magnetic thermal control valve (EMTCV) according to the first aspect of the invention.

### DRAWINGS

The Detailed Description is described with reference to the accompanying figures. The use of the same reference numbers in different instances in the description and the figures may indicate similar or identical items.
FIG. 1 is an isometric view of an electro-magnetic thermal control valve (EMTCV) in accordance with example embodiments of the present disclosure.
FIG. 2A is an isometric cross-sectional view of the EMTCV shown in FIG. 1 having a movable sleeve in an idle position in accordance with example embodiments of the present disclosure.
FIG. 2B is an isometric cross-sectional view of the EMTCV shown in FIG. 1 having a movable sleeve in an intermediate position in accordance with example embodiments of the present disclosure.
FIG. 2C is an isometric cross-sectional view of the EMTCV shown in FIG. 1 having a movable sleeve in an actuated position in accordance with example embodiments of the present disclosure.
FIG. 3 is an isometric cross-sectional view of the EMTCV shown in FIG. 1 cut along line '3' having a first sub-chamber surrounding the movable sleeve in accordance with example embodiments of the present disclosure.
FIG. 4 is an isometric cross-sectional view of the EMTCV shown in FIG. 1 along line '4' having a second sub-chamber surrounding the movable sleeve in accordance with example embodiments of the present disclosure.

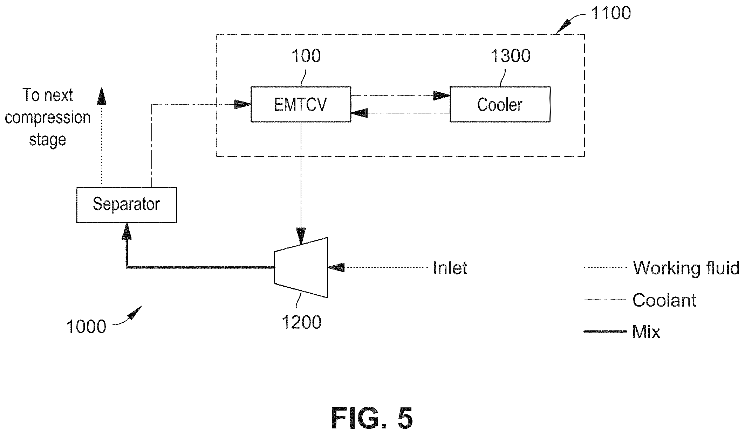

FIG. 5 is a schematic view of a fluid compressor system having a coolant circulation system including a EMTCV in accordance with example embodiments of the present disclosure.

### DETAILED DESCRIPTION

Although the subject matter has been described in language specific to structural features and/or process operations, it is to be understood that the subject matter defined in the appended claims is not necessarily limited to the specific features or acts described above. Rather, the specific features and acts described above are disclosed as example forms of implementing the claims.

### Overview

Contact-cooled fluid compressors include a coolant circulation system that circulates a coolant fluid (e.g., oil, water, etc.) that is injected into compression cavities within a compressor airend to aid cooling of the working fluid to be compressed. The coolant fluid may also provide lubrication and sealing of the compressor aired. A discharge stream of pressurized working fluid and coolant mixture may be discharged from the contact-cooled airend at a high temperature and separated in a separator tank. After separation in the separator tank, the coolant fluid may be directed to a temperature control valve (TCV). Depending on a desired airend discharge temperature, the TCV may direct the coolant fluid back to circulation in the contact-cooled airend or may direct the coolant fluid to a cooler for cooling prior to recirculation. TCVs regulate the airend discharge temperature by regulating the amount of coolant fluid that flows into the cooler.

Typical TCVs may use wax elements and/or electronic elements (e.g., stepper motors) to drive the operation of the TCVs. These elements are often unreliable and require constant maintenance and replacement of dynamic seals, which are prone to leakage and other types of failure. Moreover, these TCVs are often large in dimension, as they need to accommodate the different mechanical and other electronic elements.

Accordingly, the present disclosure is directed to an electro-magnetic thermal control valve (EMTCV) that regulates an amount of coolant fluid necessary to maintain a desired airend discharge temperature in a fluid compressor system. The EMTCV utilizes an electromagnet to actuate a movable sleeve, reducing the number of moving parts necessary to move the movable sleeve between an idle position to an actuated position.

### Detailed Description of Example Embodiments

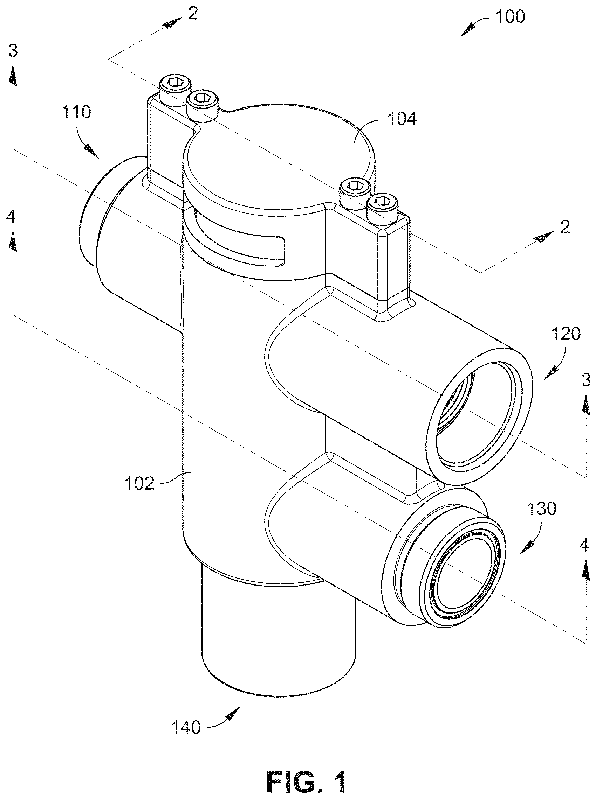

Referring generally to **FIGS. 1** through **4****,** an electro-magnetic thermal control valve (EMTCV) **100** is shown. The EMTCV **100** includes a valve housing **102** defining a coolant fluid inlet **110,** a cooler inlet **120,** a cooler outlet **130,** a coolant fluid outlet **140,** and a main chamber **150.** The valve housing **102** may include a valve endcap **104** disposed at one end of the valve housing **102,** covering an opening (not shown) to the main chamber **150.** The main chamber **150** further defines a first sub-chamber **115** and a second sub-chamber **135** along a longitudinal axis **100Y** of the main chamber **150.**

The EMTCV **100** may be used in a coolant circulation system **1100** of a fluid compressor system **1000** having at least a first airend **1200** and a cooler **1300.** The first airend compresses the working fluid (e.g., air, gas, etc.) of the fluid compressor system **1000** in a first compression stage. This compression stage increases the temperature of the working fluid. The cooler **1300** cools a coolant fluid flowing through the first airend **1200,** lowering the temperature of the working fluid prior to flowing to a next stage of the compression process. The EMTCV **100** acts as a temperature management system of the coolant circulation system **1100,** controlling the amount of a coolant needed to send to the cooler **1300** in order to maintain a desired airend discharge temperature of the first airend **1200** and/or the desired discharge temperature of the fluid compressor system **1000.** In embodiments, the next stage of the compression process may be at least a second compression stage (not shown). However, the coolant circulation system **1100** may include more than two compression stages.

In the example embodiments, the fluid compressor system **1000** includes a contact-cooled rotary (CCR) compressor, and the coolant used in the coolant circulation system **1100** is oil. In other embodiments, the coolant may be water, or another fluid configured to remove excess heat from the working fluid, keeping the airend discharge temperature within a desired temperature range.

The valve endcap **104** may be removably attached to the valve housing **102** using a plurality of fasteners **212.** In other embodiments (not shown), the valve endcap **104** may be screwed into or screwed around the respective end of the valve housing **102.** In yet another embodiment (not shown), the valve endcap **104** may be adhered to the valve housing **102** using an adhesive or may be welded to the valve housing **102.**

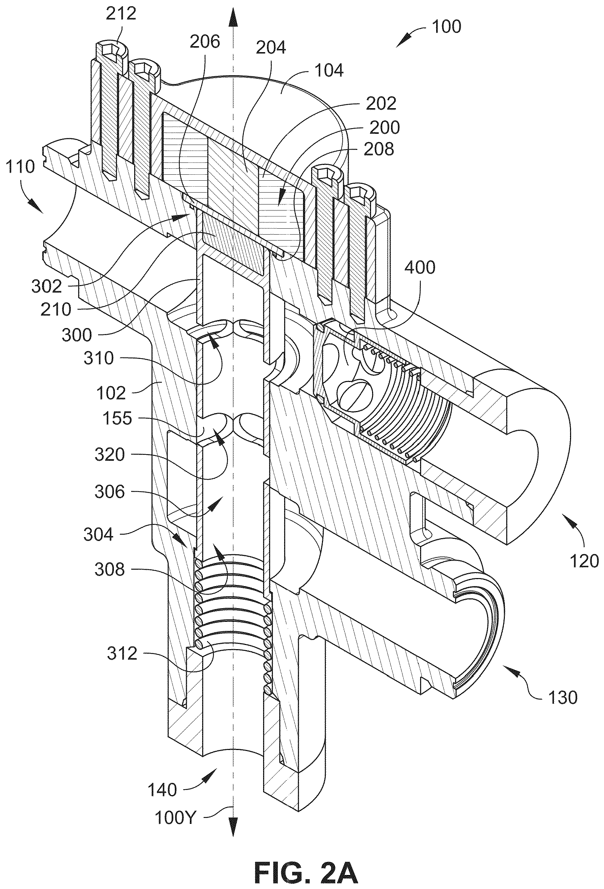

As shown in **FIGS. 2A** through **2C**, the valve endcap **104** houses an electromagnet **200.** The electromagnet **200** may include an electromagnetic coil **202** surrounding a core **204.** The valve housing **102** may include an end plate **206** and a seal **208** covering an opening (not shown) to the main chamber **150,** where the end plate **206** is adjacent to the electromagnet **200** housed in the valve endcap **104.** The valve housing **102** and the valve endcap **104** may be composed from a non-magnetic material to minimize leakage of magnetic forces in any direction other than the intended.

As shown in **FIG. 2A****,** the EMTCV **100** includes a movable sleeve **300** disposed inside main chamber **150.** The movable sleeve **300** has a first sleeve end **302** and a second end **304** along the longitudinal axis **100Y** and opposite to each other. The movable sleeve **300** defines a sleeve chamber **306.** The movable sleeve **300** further defines a permanent magnet cavity holding a permanent magnet **210,** where the permanent magnet **210** may be adjacent to the end plate **208,** opposite to the electromagnet **200.** The permanent magnet **210** is fixedly attached to the movable sleeve **300** and may be located at the first end **302** or at the second end **304.** The permanent magnet **210** may be composed of a material resistant to deterioration from being exposed to high-temperatures. For example, the permanent magnet may be made from neodymium, samarium cobalt, ceramic, or alloys including aluminum, nickel, and cobalt, among others.

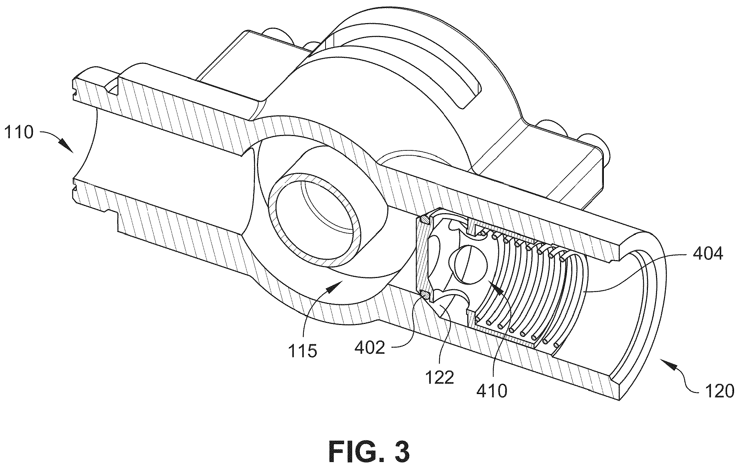

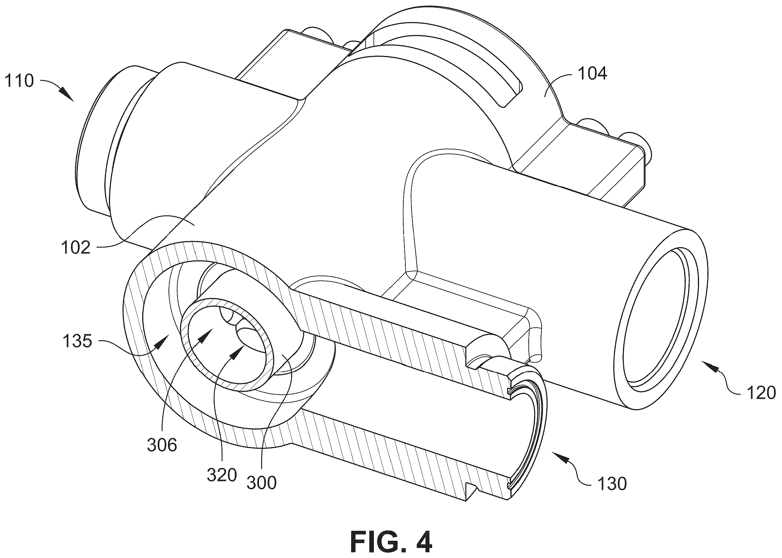

The movable sleeve **300** further defines a first sleeve inlet **310** and a second sleeve inlet **320,** where the first sleeve inlet **310** fluidly connects the first sub-chamber **115** to the sleeve chamber **306** and the second sleeve inlet **320** fluidly connects the second sub-chamber **135** to the sleeve chamber **306.** Furthermore, the movable sleeve **300** defines a sleeve outlet **308** configured to fluidly connect the sleeve chamber **306** with the coolant fluid outlet **140.** In the example embodiment shown, the first sub-chamber **115** is disposed between the coolant fluid inlet **110** and the cooler inlet **120,** as shown in **FIG. 3****.** The second sub-chamber **135** is defined at an exit of the cooler outlet **130,** as shown in **FIG. 4****.**

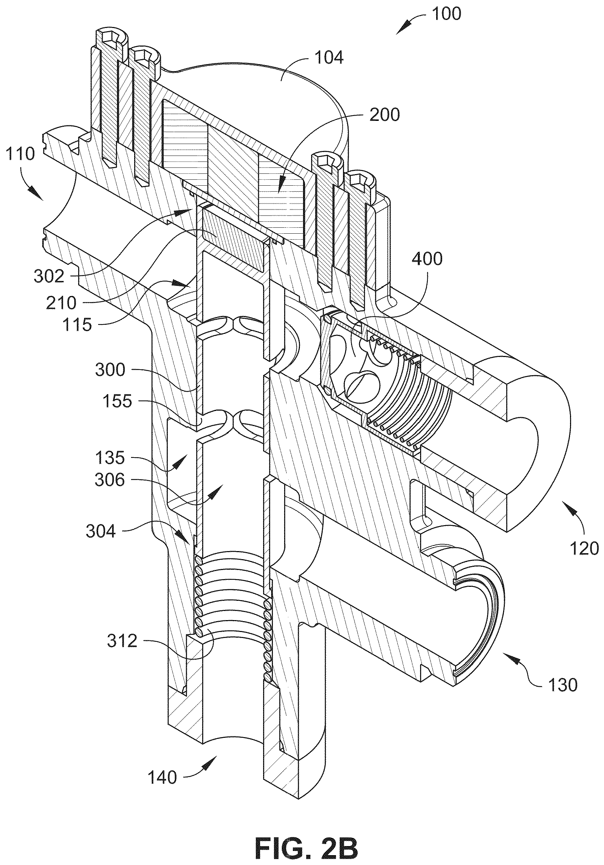

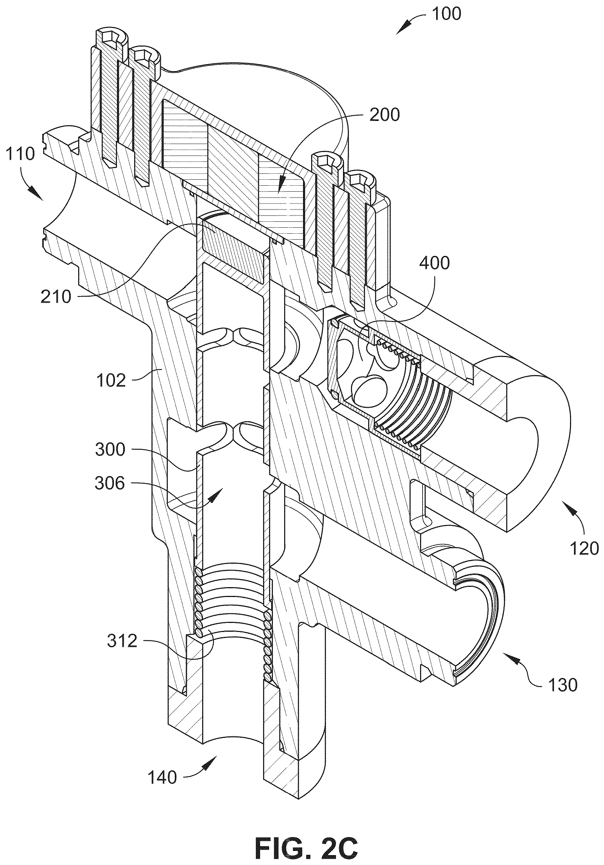

The movable sleeve **300 is** configured to be moved between a plurality of positions along the longitudinal axis **100Y.** For example, the movable sleeve **300** may be moved between an idle position as shown in **FIG. 2A****,** an intermediate position as shown in **FIG. 2B****,** and an actuated position as shown in **FIG. 2C****.**

In the idle position, shown in **FIG. 2A****,** the permanent magnet **210** housed in the first sleeve end **302** of the movable sleeve **300** rests against the endplate **206** and/or the electromagnet **200.** In this idle position, the entirety of the first sleeve inlet **310** is open to the first sub-chamber **115** while the second sleeve inlet **320** is not open to the second sub-chamber **135.** In the idle position, the second sleeve inlet **320** faces an inner surface **155** of the main chamber **150.** As the movable sleeve **300** moves towards an intermediate position, the permanent magnet **210** moves away from the electromagnet **200** as shown in **FIG. 2B****.** The first sleeve inlet **310** is partially closed from the first sub-chamber **115** and is partially covered by the inner surface **155.** In the intermediate position of the movable sleeve **300,** the second sleeve inlet **320** partially opens, fluidly connecting the second sub-chamber **135** with the sleeve chamber **306.** As the movable sleeve **300** reaches the actuated position **(****FIG. 2C****)** the first sleeve inlet **310** is fully closed to the first sub-chamber **115,** preventing or not allowing a fluid flow into the sleeve chamber **306.** In the actuated position, the second sleeve inlet **320** fully opens the sleeve chamber **306** to the second sub-chamber **135.**

In example embodiments (not shown), the EMTCV **100** may include a plurality of permanent magnets **210** located at either the first end **302** or the second end **304** of the movable sleeve **300,** or surrounding the movable sleeve **300.** The EMTCV **100** may also include a plurality of electromagnets **200** located in the valve housing **102** in proximity to the movable sleeve **300.** The plurality of electromagnets **200** are supplied with a current by the valve control system and actuate the movable sleeve **300.** It should be understood that any number combination of electromagnets **200** and permanent magnets **210** may be implemented in an embodiment of the EMTCV **100** on either the first end **302** and/or the second end **304** of the movable sleeve **300.**

In other example embodiments (not shown) the EMTCV **100** may not include a permanent magnet **210** attached to the movable sleeve **300.** In this example, the electromagnet **200** may exert either an attractive or a repulsive force directly on the movable sleeve **300.** In this example, the movable sleeve **300** is composed from a ferromagnetic material that has a high susceptibility to being attracted to magnetic fields produced by the permanent magnet **210.** Examples of ferromagnetic materials include but are not limited to iron, cobalt, nickel, etc., or alloys and other combinations thereof.

In example embodiments, as shown in **FIGS. 2A** through **2C****,** the movable sleeve **300** is biased in a direction towards the valve endcap **104** and/or the electromagnet **200** by a biasing component (e.g., a spring) **312.** For example, the biasing component **312** may be a compression spring, a tension spring, or the like. In other embodiments (not shown) the biasing component **312** may bias the movable sleeve **300** away from the valve endcap **104** and/or the electromagnet **200.** In other embodiments (not shown) the EMTCV **100** may include a plurality of biasing components **312** or may not include any biasing component **312** biasing the movable sleeve **300** towards any predetermined position.

When the EMTCV **100** is actuated, a current is supplied to the electromagnet **200,** creating a magnetic field that exerts a force on the permanent magnet **210.** The actuation of the EMTCV **100** may be controlled by a valve control system (not shown), where the valve control system positions the movable sleeve **300** by balancing the forces acting on the movable sleeve **300.** The valve control system may be in communication with a plurality of sensors, including but not limited to airend temperature sensors, pressure sensors, working fluid humidity sensors, ambient temperature sensors, ambient humidity sensors, etc. The valve control system may receive an input temperature, or a desired airend temperature to maintain. The forces acting on the movable sleeve **300** may be a combination of magnetic forces exerted by the electromagnet **200** to either the permanent magnet **210** or directly to the movable sleeve **300,** gravitational forces, and/or biasing forces acting on the movable sleeve **300.** The movable sleeve **300** may be mechanically or magnetically biased towards the idle position, directing the coolant fluid flow to by-pass the cooler **1300.** If the coolant circulation system **1100** or the fluid compressor system **1000** is shut-down, the movable sleeve **300** will remain biased towards the idle position.

In the embodiment shown, when the valve control system actuates the electromagnet **200,** the electromagnet **200** exerts a repulsive force with respect to the permanent magnet **210,** pushing the permanent magnet **210** away from the electromagnet **200** in a direction towards the second end **304** of the movable sleeve **300.** This repulsive electromagnetic force fully actuates or partially actuates the movable sleeve **300** into a fully actuated position or into a plurality of intermediate positions, respectively. It should be understood that if the electromagnet **200** and/or the permanent magnet **210** were located at a different end of the movable sleeve **300,** the actuation of the electromagnet **200** may move the movable sleeve **300** in a direction towards the first end **302** of the movable sleeve **300.** For example, the polarity of the electromagnet **200** may be reversed by reversing the polarity and/or direction of the current supplied, causing the electromagnet **200** to exert an attractive force with respect to the permanent magnet **210,** thereby pulling the permanent magnet **210** and the movable sleeve in a direction towards the first end **302** of the movable sleeve **300.**

The electromagnetic force generated by the electromagnet **200** is proportional to a current supplied to the electromagnet **200** by the valve control system. The more current is supplied to the electromagnet **200,** the stronger the electromagnetic force exerted by the electromagnet **200** is. In the example embodiment where the electromagnet **200** exerts a repulsive force to the permanent magnet **210,** the stronger the current supplied to the electromagnet **200** is, the stronger the force pushing the permanent magnet **210** and the movable sleeve **300** away from the electromagnet **200.** This relationship between the current supplied to the electromagnet **200** and the force exerted by the electromagnet **200** allows to vary the movement of the movable sleeve to a plurality of intermediate positions by controlling the amount and the direction of the current supplied to the electromagnet **200,** which in turn controls the amount of coolant flowing to the cooler **1300.**

During operation of the EMTCV **100,** at the idle position, the coolant fluid flows into the coolant fluid inlet **110,** filling the first sub-chamber **115,** and flowing into the sleeve chamber **306** through the first sleeve inlet **310.** The coolant fluid exits the sleeve chamber **306** through the sleeve outlet **308** and flows out of the EMTCV **100** through the coolant fluid outlet **140,** completely by-passing the cooler **1300.** In example embodiments, the cooler inlet **120** may include a check valve **400** located at the entrance of the cooler inlet **120.** The check valve **400** blocks coolant fluid backflow from the cooler **1300** from returning to the first sub-chamber **115.** The check valve **400** may also block coolant fluid flow into the cooler **1300** as the coolant fluid accumulation in the first sub-chamber is lower than a cracking pressure of the check valve **400** when the first sleeve inlet **310** is fully open to the first sub-chamber **115** in the idle position of the movable valve **300.** It should be understood that the EMTCV **100** may not include a check valve **400** in different embodiments.

The check valve **400** may include an opening **410** to allow the flow of coolant fluid. The check valve **400** may also include a biasing component **404** such as, but not limited to, a compression spring, and a check valve seal **402,** where the biasing component biases the check valve seal against a shoulder **122** defined in the cooler inlet **120.**

As the temperature of the working fluid increases, the valve control system partially actuates the EMTCV **100** by supplying a current to the electromagnet **200.** The electromagnet **200** exerts a force on the permanent magnet **210** and/or the movable sleeve **300** to move (e.g., push, pull, etc.) the movable sleeve **300** from the idle position to one of a plurality of intermediate positions. As the movable sleeve **300** is moved, the first sleeve inlet **310** is partially closed by the inner surface **155** of the valve housing **102.** The partially closed first sleeve inlet **310** allows a lower volume of coolant fluid flow into the sleeve chamber **306** from the first sub-chamber **115.** As a pressure inside the first sub-chamber **115** increases, the pressure of the coolant fluid surpasses the cracking pressure of the check valve **400,** partially opening the check valve **400.** The coolant fluid flow is split between a first coolant flow that enters the first sleeve inlet **310** and a second coolant flow flowing into the cooler inlet **120** to be cooled in the cooler **1300.** The second coolant flow returns from the cooler **1300** through the cooler outlet **130** and fills the second sub-chamber **135.** The second coolant flow then enters the sleeve cavity **306** through the partially opened second sleeve inlet **320** and is rejoined with first coolant flow prior to exiting the EMTCV **100** through the coolant fluid flow outlet **140.**

If the temperature of the working fluid and/or the airend discharge temperature exceeds a predetermined range, the valve control system of the EMTCV **100** fully actuates the movable sleeve **300** to the actuated position, where the first sleeve inlet **310** is completely closed, directing the entirety coolant fluid flow from the first sub-chamber **115** to the cooler inlet **120** through the fully opened check valve **400.** After being cooled in the cooler **1300,** the coolant fluid once again enters the EMTCV **100** through the cooler outlet **130** and is directed to the sleeve chamber **306** via the now fully-opened second sleeve inlet **320.** The cooled coolant fluid exits the EMTCV **100** through the coolant fluid outlet **140.**

In example embodiments (not shown), the current supplied to the electromagnet **200** by the valve control system to energize electromagnet **200** and exert a force on the permanent magnet **210** is reversed, thereby supplying an electromagnetic force that pulls the permanent magnet **210** in a direction towards the electromagnet **200** and pulling the movable sleeve towards the idle position.

In embodiments, at least one temperature input of the airend discharge is provided o the valve control system to allow the electromagnet **200** to position the movable sleeve **300** at a desired position from among the plurality of intermediate positions to achieve a desired airend coolant injection temperature. In addition to the airend discharge temperature input, an additional ambient humidity and ambient temperature input may be sent to the valve control system to allow for the calculation of a pressure-dew-point temperature for the working fluid and the coolant fluid mixture. This data may enable the valve control system to maintain the coldest airend discharge temperature possible without forming condensation in the coolant fluid.

Additionally, the valve control system may be in communication with a controller that controls a variable speed cooling fan on air cooled compressor packages, for improved energy efficiency of a fan motor energy consumption (i.e.: slow it down as appropriate). The valve control system may also use the data acquired by one or more of the sensors discussed above to send to the controller for the operation of other compressor components such as, but not limited to, drain valves and integrated dryers, or external system components such as standalone dryers and drain valves.

The EMTCV may be connected to different components (not shown) of the coolant circulation system **1100,** including but not limited to a separator tank, a cooler such as an evaporator or a heat exchanger, a contact-cooled airend, another temperature controlled valve (TCV), another EMTCV, etc. For example, in a CCR compressor, after being separated from the working fluid and discharged from the separator tank, a hot coolant may be directed to the EMTCV **100.** The EMTCV **100** can control and selectably direct the coolant flow in the coolant circulation system **1100** towards the cooler (e.g., the evaporator) or the airend based on the desired temperature of the coolant flow. As the cooled coolant fluid exits the cooler, it may flow back into the EMTCV through the cooler outlet **130,** where the EMTCV **100** directs the coolant fluid back to contact-cooled airend after exiting the coolant fluid outlet **140.**

In another embodiment (not shown), the coolant circulation system **1100** may include a first cooler, a second cooler, a primary EMTCV and a secondary EMTCV fluidly connected to a respective contact-cooled airend. In this embodiment, the coolant fluid may be directed to a secondary EMTCV after exiting a first cooler, where the secondary EMTCV selectably directs the cooled coolant to a second cooler for further cooling or back into the contact-cooled airend through the primary EMTCV, depending on the desired temperature of the coolant prior to entering the contact-cooled airend. In example embodiments, the fluid compressor system 1000 may have any number of EMTCVs and is not limited to having only a primary and a secondary EMTCV in connection with a respective airend.

In embodiments, the cooler **1300** may be a brazed plate heat exchanger, but any other type of heat exchanger may be used to absorb heat from the hot coolant according to example embodiments of the present disclosure.

In the example embodiment shown in **FIGS. 2A** through **4****,** the seal **208** is an O-ring seal. In other example embodiments, the seal may be a U-ring, a V-ring, a flat seal, a lip seal, guide rings, among others. The ring seals may be composed from Polytetrafluoroethylene (PTFE), nitrile, neoprene, ethylene propylene diene monomer (EPDM) rubber, a fluorocarbon rubber, or a combination thereof.

In example embodiments, the fluid compressor system **1000** includes a CCR screw compressor. In other example embodiments (not shown), the fluid compressor system **1000** may have an oil-free rotary (OFR) screw compressor, a rotary vane compressor, a reciprocating compressor, a centrifugal compressor or an axial compressor. In other example embodiments, the EMTCV may be incorporated or retrofitted with other equipment having a compression application, including but not limited to, heating, ventilation, and air conditioning (HVAC) systems, refrigeration systems, gas turbine systems, automotive applications, and so forth. In yet another example, the EMTCV may be used as a three-way valve and used in operations with power tools, pumps, blowers, medical devices, etc.

Modifications and improvements may be incorporated without departing from the scope of the present invention as defined in the appended claims. In reading the claims, it is intended that when words such as "a," "an," "at least one," or "at least one portion" are used there is no intention to limit the claim to only one item unless specifically stated to the contrary in the claim. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

## Claims

1. An electro-magnetic thermal control valve (EMTCV) configured to selectably direct and control an amount of coolant fluid to a cooler in a coolant circulation system, the EMTCV (100) comprising:
a valve housing (102) defining a main chamber;
an electromagnet (200) disposed in the valve housing (102); and
a movable sleeve (300) disposed within the main chamber, the movable sleeve having a first end (302) holding a permanent magnet (210) adjacent to the electromagnet (200), the movable sleeve configured to move between an idle position, an intermediate position, and an actuated position,
wherein when the electromagnet (200) is energized, the electromagnet causes the movable sleeve (300) to move towards the actuated position; and wherein:
the valve housing (102) further defines a coolant fluid inlet (110), a coolant fluid outlet (140), a cooler inlet (120) and a cooler outlet (130);
the movable sleeve (300) has a second end (304) and defines a sleeve chamber (306); and
when the electromagnet (200) is energized the electromagnet exerts a force with respect to the permanent magnet (210) to move the movable sleeve (300) towards the actuated position.

2. The EMTCV of claim 1, wherein the EMTCV (100) further includes a first sleeve inlet (310), a second sleeve inlet (320), and a sleeve outlet (308) and the valve housing (102) further defines a first sub-chamber (115) and a second sub-chamber (135), the first sub-chamber defined between the coolant fluid inlet (110) and the cooler inlet (120), and the second sub-chamber defined at an exit of the cooler outlet (130).

3. The EMTCV of claim 2, wherein at the idle position, the coolant fluid flows into the coolant fluid inlet (110), filling the first sub-chamber (115), flowing into the sleeve chamber (306) through the first sleeve inlet (310), and exiting through the coolant fluid outlet (140), thereby by-passing the cooler when in use.

4. The EMTCV of claim 2 or claim 3, wherein at the intermediate position, the coolant fluid flows from the coolant fluid inlet (110) to the first sub-chamber (115) and is split between a first coolant fluid flow and a second coolant fluid flow, the first coolant fluid flow flowing into the sleeve chamber (306) through the first sleeve inlet (310), and the second coolant fluid flowing to the cooler inlet (120) to be cooled prior to entering the second sub-chamber (135) through the cooler outlet (130), entering the sleeve chamber through the second sleeve inlet (320) and rejoining the first coolant fluid flow prior to exiting through the coolant fluid outlet (140).

5. The EMTCV of any of claims 2-4, wherein at the actuated position, the coolant fluid flows into the coolant fluid inlet (110), filling the first sub-chamber (115) and flowing to the cooler inlet (120) to be cooled prior to entering the second sub-chamber (135) through the cooler outlet (130), entering the sleeve chamber (306) through the second sleeve inlet (320), and exits through the coolant fluid outlet (140).

6. The EMTCV of any preceding claim, further comprising a biasing component (312) biasing the movable sleeve (300) in the idle position, in a direction towards the first end (302) of the movable sleeve when the electromagnet (200) is not energized.

7. The EMTCV of claim 6, wherein the biasing component (312) is at least one of a compression spring or a tension spring.

8. The EMTCV of any preceding claim, wherein the force generated by the electromagnet (200) is proportional to a current supplied to the electromagnet, allowing to vary the movement of the movable sleeve (300) to a plurality of intermediate positions and control the amount of coolant flowing to the cooler inlet (120).

9. The EMTCV of any preceding claim, wherein a current supplied to the electromagnet (200) to energize the electromagnet is reversed, supplying an electromagnetic force that pulls the permanent magnet (210) in a direction towards the electromagnet, and pulling the movable sleeve (300) towards the idle position.

10. A coolant circulation system for regulating a discharge temperature in a compressor airend, the coolant circulation system (1100) comprising:
a cooler (1300) configured to cool a coolant fluid circulating through the coolant circulation system; and
an EMTCV (100) according to any preceding claim.

## Patentansprüche

1. Ein elektromagnetisches thermisches Regelventil (EMTCV), das konfiguriert ist, um selektiv eine Menge an Kühlmittelfluid zu einem Kühler in einem Kühlmittelzirkulationssystem zu leiten und zu regeln, wobei das EMTCV (100) Folgendes beinhaltet:
ein Ventilgehäuse (102), das eine Hauptkammer definiert;
einen Elektromagneten (200), der in dem Ventilgehäuse (102) angeordnet ist; und
eine bewegbare Hülse (300), die in der Hauptkammer angeordnet ist, wobei die bewegbare Hülse ein erstes Ende (302) aufweist, das einen Permanentmagneten (210) neben dem Elektromagneten (200) hält, wobei die bewegbare Hülse konfiguriert ist, um sich zwischen einer Ruheposition, einer Zwischenposition und einer betätigten Position zu bewegen,
wobei, wenn der Elektromagnet (200) erregt wird, der Elektromagnet bewirkt, dass sich die bewegbare Hülse (300) in Richtung der betätigten Position bewegt; und wobei:
das Ventilgehäuse (102) ferner einen Kühlmittelfluideinlass (110), einen Kühlmittelfluidauslass (140), einen Kühlereinlass (120) und einen Kühlerauslass (130) definiert;
die bewegbare Hülse (300) ein zweites Ende (304) aufweist und eine Hülsenkammer (306) definiert; und
wenn der Elektromagnet (200) erregt wird, der Elektromagnet eine Kraft in Bezug auf den Permanentmagneten (210) ausübt, um die bewegbare Hülse (300) in Richtung der betätigten Position zu bewegen.

2. EMTCV gemäß Anspruch 1, wobei das EMTCV (100) ferner einen ersten Hülseneinlass (310), einen zweiten Hülseneinlass (320) und einen Hülsenauslass (308) umfasst und das Ventilgehäuse (102) ferner eine erste Unterkammer (115) und eine zweite Unterkammer (135) definiert, wobei die erste Unterkammer zwischen dem Kühlmittelfluideinlass (110) und dem Kühlereinlass (120) definiert ist und die zweite Unterkammer an einem Ausgang des Kühlerauslasses (130) definiert ist.

3. EMTCV gemäß Anspruch 2, wobei das Kühlmittelfluid in der Ruheposition in den Kühlmittelfluideinlass (110) strömt, die erste Unterkammer (115) füllt, durch den ersten Hülseneinlass (310) in die Hülsenkammer (306) strömt und durch den Kühlmittelfluidauslass (140) austritt, wodurch der Kühler im Gebrauch umgangen wird.

4. EMTCV gemäß Anspruch 2 oder Anspruch 3, wobei das Kühlmittelfluid in der Zwischenposition von dem Kühlmittelfluideinlass (110) zu der ersten Unterkammer (115) strömt und in einen ersten Kühlmittelfluidstrom und einen zweiten Kühlmittelfluidstrom aufgeteilt wird, wobei der erste Kühlmittelfluidstrom durch den ersten Hülseneinlass (310) in die Hülsenkammer (306) strömt und das zweite Kühlmittelfluid zu dem Kühlereinlass (120) strömt, um gekühlt zu werden, bevor es durch den Kühlerauslass (130) in die zweite Unterkammer (135) eintritt, durch den zweiten Hülseneinlass (320) in die Hülsenkammer eintritt und sich wieder mit dem ersten Kühlmittelfluidstrom verbindet, bevor es durch den Kühlmittelfluidauslass (140) austritt.

5. EMTCV gemäß einem der Ansprüche 2-4, wobei das Kühlmittelfluid in der betätigten Position in den Kühlmittelfluideinlass (110) strömt, die erste Unterkammer (115) füllt und zu dem Kühlereinlass (120) strömt, um gekühlt zu werden, bevor es durch den Kühlerauslass (130) in die zweite Unterkammer (135) eintritt, durch den zweiten Hülseneinlass (320) in die Hülsenkammer (306) eintritt und durch den Kühlmittelfluidauslass (140) austritt.

6. EMTCV gemäß einem der vorhergehenden Ansprüche, das ferner eine Vorspannkomponente (312) beinhaltet, die die bewegbare Hülse (300) in der Ruheposition in eine Richtung in Richtung des ersten Endes (302) der bewegbaren Hülse vorspannt, wenn der Elektromagnet (200) nicht erregt wird.

7. EMTCV gemäß Anspruch 6, wobei die Vorspannkomponente (312) mindestens eine von einer Druckfeder oder einer Zugfeder ist.

8. EMTCV gemäß einem der vorhergehenden Ansprüche, wobei die Kraft, die durch den Elektromagneten (200) erzeugt wird, proportional zu einem Strom ist, der dem Elektromagneten zugeführt wird, was ermöglicht, die Bewegung der bewegbaren Hülse (300) in eine Vielzahl von Zwischenpositionen zu variieren und die Menge an Kühlmittel zu regeln, die zu dem Kühlereinlass (120) strömt.

9. EMTCV gemäß einem der vorhergehenden Ansprüche, wobei ein Strom, der dem Elektromagneten (200) zugeführt wird, um den Elektromagneten zu erregen, umgekehrt wird, wodurch eine elektromagnetische Kraft zugeführt wird, die den Permanentmagneten (210) in eine Richtung in Richtung des Elektromagneten zieht und die bewegbare Hülse (300) in Richtung der Ruheposition zieht.

10. Ein Kühlmittelzirkulationssystem zum Regeln einer Verdichtungsendtemperatur in einem Kompressor-Airend, wobei das Kühlmittelzirkulationssystem (1100) Folgendes beinhaltet:
einen Kühler (1300), der konfiguriert ist, um ein Kühlmittelfluid zu kühlen, das durch das Kühlmittelzirkulationssystem zirkuliert; und
ein EMTCV (100) gemäß einem der vorhergehenden Ansprüche.

## Revendications

1. Une soupape de contrôle thermique électromagnétique (EMTCV, *electro-magnetic thermal control valve)* configurée pour diriger et contrôler de manière sélective une quantité de fluide de réfrigérant jusqu'à un refroidisseur dans un système de circulation de réfrigérant, l'EMTCV (100) comprenant :
un boîtier de soupape (102) définissant une chambre principale ;
un électroaimant (200) disposé dans le boîtier de soupape (102) ; et
un manchon mobile (300) disposé à l'intérieur de la chambre principale, le manchon mobile ayant une première extrémité (302) maintenant un aimant permanent (210) adjacente à l'électroaimant (200), le manchon mobile étant configuré pour se mouvoir entre une position de repos, une position intermédiaire, et une position actionnée,
dans laquelle lorsque l'électroaimant (200) est excité, l'électroaimant amène le manchon mobile (300) à se mouvoir vers la position actionnée ; et dans laquelle :
le boîtier de soupape (102) définit en outre un orifice d'entrée de fluide de réfrigérant (110), un orifice de sortie de fluide de réfrigérant (140), un orifice d'entrée de refroidisseur (120) et un orifice de sortie de refroidisseur (130) ;
le manchon mobile (300) a une deuxième extrémité (304) et définit une chambre de manchon (306) ; et
lorsque l'électroaimant (200) est excité, l'électroaimant exerce une force par rapport à l'aimant permanent (210) pour mouvoir le manchon mobile (300) vers la position actionnée.

2. L'EMTCV de la revendication 1, l'EMTCV (100) incluant en outre un premier orifice d'entrée de manchon (310), un deuxième orifice d'entrée de manchon (320), et un orifice de sortie de manchon (308) et le boîtier de soupape (102) définissant en outre une première sous-chambre (115) et une deuxième sous-chambre (135), la première sous-chambre étant définie entre l'orifice d'entrée de fluide de réfrigérant (110) et l'orifice d'entrée de refroidisseur (120), et la deuxième sous-chambre étant définie au niveau d'une sortie de l'orifice de sortie de refroidisseur (130).

3. L'EMTCV de la revendication 2, dans laquelle au niveau de la position de repos, le fluide de réfrigérant s'écoule jusque dans l'orifice d'entrée de fluide de réfrigérant (110), remplissant la première sous-chambre (115), s'écoulant jusque dans la chambre de manchon (306) à travers le premier orifice d'entrée de manchon (310), et sortant à travers l'orifice de sortie de fluide de réfrigérant (140), contournant ainsi le refroidisseur lors de l'utilisation.

4. L'EMTCV de la revendication 2 ou de la revendication 3, dans laquelle au niveau de la position intermédiaire, le fluide de réfrigérant s'écoule de l'orifice d'entrée de fluide de réfrigérant (110) à la première sous-chambre (115) et est divisé entre un premier écoulement de fluide de réfrigérant et un deuxième écoulement de fluide de réfrigérant, le premier écoulement de fluide de réfrigérant s'écoulant jusque dans la chambre de manchon (306) à travers le premier orifice d'entrée de manchon (310), et le deuxième fluide de réfrigérant s'écoulant jusqu'à l'orifice d'entrée de refroidisseur (120) pour être refroidi avant d'entrer dans la deuxième sous-chambre (135) à travers l'orifice de sortie de refroidisseur (130), entrant dans la chambre de manchon à travers le deuxième orifice d'entrée de manchon (320) et rejoignant le premier écoulement de fluide de réfrigérant avant de sortir à travers l'orifice de sortie de fluide de réfrigérant (140).

5. L'EMTCV de n'importe lesquelles des revendications 2 à 4, dans laquelle au niveau de la position actionnée, le fluide de réfrigérant s'écoule jusque dans l'orifice d'entrée de fluide de réfrigérant (110), remplissant la première sous-chambre (115) et s'écoulant jusqu'à l'orifice d'entrée de refroidisseur (120) pour être refroidi avant d'entrer dans la deuxième sous-chambre (135) à travers l'orifice de sortie de refroidisseur (130), entrant dans la chambre de manchon (306) à travers le deuxième orifice d'entrée de manchon (320), et sort à travers l'orifice de sortie de fluide de réfrigérant (140).

6. L'EMTCV de n'importe quelle revendication précédente, comprenant en outre un composant de sollicitation (312) sollicitant le manchon mobile (300) dans la position de repos, dans une direction vers la première extrémité (302) du manchon mobile lorsque l'électroaimant (200) n'est pas excité.

7. L'EMTCV de la revendication 6, dans laquelle le composant de sollicitation (312) est au moins un ressort d'entre un ressort de compression ou un ressort de tension.

8. L'EMTCV de n'importe quelle revendication précédente, dans laquelle la force générée par l'électroaimant (200) est proportionnelle à un courant fourni à l'électroaimant, permettant de faire varier le mouvement du manchon mobile (300) jusqu'à une pluralité de positions intermédiaires et de contrôler la quantité de réfrigérant s'écoulant jusqu'à l'orifice d'entrée de refroidisseur (120).

9. L'EMTCV de n'importe quelle revendication précédente, dans laquelle un courant fourni à l'électroaimant (200) pour exciter l'électroaimant est inversé, fournissant une force électromagnétique qui tire l'aimant permanent (210) dans une direction vers l'électroaimant, et tirant le manchon mobile (300) vers la position de repos.

10. Un système de circulation de réfrigérant pour réguler une température de refoulement dans une extrémité d'air de compresseur, le système de circulation de réfrigérant (1100) comprenant :
un refroidisseur (1300) configuré pour refroidir un fluide de réfrigérant circulant à travers le système de circulation de réfrigérant ; et
une EMTCV (100) selon n'importe quelle revendication précédente.
